# EUROPÄISCHE PATENTANMELDUNG

(11) **EP 3 732 956 A1**
(43) Veröffentlichungstag der Anmeldung: **04.11.2020**
(21) Anmeldenummer: 20000166.7
(22) Anmeldetag: 27.04.2020
(51) Int. Cl.: A01F 15/10, A01D 90/04

(54) **SCHNEIDVORRICHTUNG FÜR LANDWIRTSCHAFTLICHES ERNTEGUT**

(30) Priorität: 29.04.2019 DE 102019003035
(71) Anmelder: Maschinenfabrik Bernard Krone GmbH & Co. KG, 48480 Spelle (DE)
(72) Erfinder: Kalverkamp, Felix, 45665 Recklinghausen (DE); Trentmann, Justus, 49219 Glandorf (DE)

(57) **Zusammenfassung**

Schneidvorrichtung für landwirtschaftliches Erntegut mit mehreren Schneidelementen (4) und einem im Betrieb um eine Rotorachse (6), zu der die Schneidelemente (4) in einer Schneidstellung ortsfest federnd nachgiebig angeordnet sind, rotierendem Rotorelement (8), das einen Zentralkörper (10) umfasst, an dem in einem Zentralförderabschnitt (12) des Rotorelementes (8) mehrere, den jeweiligen Schneidelementen (4) zugeordnete Zentralförderelemente (14) angeordnet sind und an dem in zumindest einem Axialförderabschnitt (16) des Rotorelementes (8) mindestens ein zumindest abschnittsweise spiralförmig um die Rotorachse (6) verlaufendes Axialförderelement (18) angeordnet ist, wobei ein Radius (R1) des Zentralkörpers (10) im Axialförderabschnitt (16) zumindest abschnittsweise größer ist als ein Radius (R2) des Zentralkörpers (10) im Zentralförderabschnitt (12).

## Beschreibung

Die Erfindung betrifft eine Schneidvorrichtung für landwirtschaftliches Erntegut. Die Schneidvorrichtung hat mehrere Schneidelemente und ein Rotorelement, das im Betrieb um eine Rotorachse rotiert. Die Schneidelemente sind relativ zur Rotorachse in einer Schneidstellung federnd nachgiebig vorgesehen. Das Rotorelement hat einen Zentralkörper, an dem in einem Zentralförderabschnitt des Rotorelementes mehrere Zentralförderelemente angeordnet sind, die jeweils einem Schneidelement zugeordnet sind. An dem Zentralkörper ist in zumindest einem Axialförderabschnitt des Rotorelementes mindestens ein Axialförderelement angeordnet, das zumindest abschnittweise spiralförmig um die Rotorachse verläuft.

Die EP 0 815 720 B1 offenbart eine gattungsgemäße Schneidvorrichtung. Im Betrieb wird das Erntegut durch die Zentralförderelemente an den Schneidelementen in der Schneidstellung entlang gefördert und durch diese geschnitten. Durch das Axialförderelement lässt sich Erntegut in axialer Richtung zum Zentralförderabschnitt fördern.

Nachteilig bei gattungsgemäßen Schneidvorrichtungen ist, dass ein großer Anteil des Erntegutes durch das Axialförderelement seitlich gegen das nächstliegende Schneidelement gefördert wird, wodurch es zu einer erhöhten Bauteilbelastung und einem mangelhaften Schnitt des Erntegutes kommt.

Aufgabe der vorliegenden Erfindung ist es, die Zuverlässigkeit gattungsgemäßer Schneidvorrichtungen sowie die Qualität damit geschnittenen Erntegutes zu erhöhen.

Erfindungsgemäß wird die Aufgabe dadurch gelöst, dass ein Radius des Zentralkörpers im Axialförderabschnitt zumindest abschnittsweise größer ist als ein Radius des Zentralkörpers im Zentralförderabschnitt.

Die erfindungsgemäße Schneidvorrichtung ist insbesondere zum Einsatz in landwirtschaftlichen Maschinen ausgebildet. Die Schneidvorrichtung bildet insbesondere einen Förderkanal zumindest mit aus, an den der Zentralförderabschnitt bevorzugt angrenzt. Die Schneidelemente sind bevorzugt zumindest in der Schneidstellung unterhalb der Rotorachse angeordnet, wodurch das Erntegut durch das Rotorelement im Betrieb unterschächtig gefördert wird. Die Schneidelemente ragen in ihrer Schneidstellung insbesondere von einer relativ zum Rotorelement gegenüberliegenden Wandung des Förderkanals in diesen hinein. Im Betrieb der Schneidvorrichtung sind die Schneidelemente bevorzugt nachgiebig in der Schneidstellung gelagert, um bei Fremdkörpern im Förderkanal ausweichen zu können. Die Schneidelemente sind insbesondere nicht um die Rotorachse drehbar gelagert. Außer Betrieb der Schneidvorrichtung lassen sich vorzugsweise Gruppen von Schneidelementen wählen, die sich im folgenden Betrieb in der Schneidstellung befinden.

Der Zentralförderabschnitt hat eine Erstreckung in Richtung der Rotorachse, die insbesondere der Breite des Förderkanals, bevorzugt der Breite einer auf den Förderkanal folgenden Presskammer entspricht. Insbesondere hat der Zentralförderabschnitt eine Breite von zumindest im Wesentlichen 1,20 m. Zusammengenommen haben der Zentralförderabschnitt und der zumindest eine Axialförderabschnitt insbesondere eine Breite von zumindest im Wesentlichen 2 m oder mehr.

Der Axialförderabschnitt des Rotorelementes schließt in axialer Richtung an den Zentralförderabschnitt an. Insbesondere hat das Rotorelement zwei Axialförderabschnitte, die sich in eine Gesamtförderrichtung, bevorzugt von vorne, betrachtet links und rechts vom Zentralförderabschnitt befinden. Der zumindest eine Axialförderabschnitt dient der Zuförderung von Erntegut, das neben dem Zentralförderabschnitt zum Rotorelement gelangt ist, zum Zentralförderabschnitt. Durch das zumindest abschnittsweise spiralförmige Axialförderelement wird im Betrieb ein Axialförderimpuls auf das in diesem Bereich vorliegende Erntegut aufgebracht.

Das Rotorelement ist insbesondere zu einer Rotation mit 110 bis 180 Umdrehungen pro Minute ausgebildet. Der sich vorzugsweise über die gesamte Länge bzw. Breite des Rotorelementes erstreckende Zentralkörper ist insbesondere als Welle, bevorzugt als Hohlwelle, mit einer sowohl in axialer als auch in Umfangsrichtung geschlossenen äußeren Oberfläche ausgebildet. Auf dieser Oberfläche sind im Zentralförderabschnitt die Zentralförderelemente sowie im zumindest einem Axialförderabschnitt das zumindest eine Axialförderelement aufgebracht. Zwischen zwei Zentralförderelementen grenzt der Förderkanal insbesondere auch an den Zentralkörper bzw. dessen Oberfläche an. Auch das zumindest eine Axialförderelement deckt den Zentralkörper im Axialförderabschnitt insbesondere nicht flächig ab, sondern grenzt nur an einen geringen Anteil von dessen Oberfläche. Die Förderelemente sind insbesondere starr an dem Zentralkörper fixiert, bevorzugt damit verschweißt. Bei einem mehrteiligen Aufbau des Zentralkörpers, etwa aus Wellenteilstücken unterschiedlicher Radien, sind auch dessen Wellenteilstücke bevorzugt starr miteinander verbunden, besonders bevorzugt miteinander verschweißt.

Jedem Schneidelement ist bevorzugt zumindest ein Zentralförderelement zugeordnet. Insbesondere ist jedem Schneidelement zumindest ein Paar von Zentralförderelementen zugeordnet, die einen sich in radialer Richtung erstreckenden Spalt zwischen sich ausbilden und im Betrieb beidseitig entlang des jeweiligen Schneidelementes rotieren. Besonders bevorzugt sind jedem Schneidelement eine Mehrzahl, vorzugsweise drei, solcher Paare zugeordnet, die sich entlang des Umfangs des Rotorelementes verteilen. Durch eine kämmende Bewegung der Zentralförderelemente mit den Schneidelementen wird ein effektiver Schnitt des Erntegutes realisiert.

Dadurch, dass der Zentralkörper im Axialförderabschnitt einen größeren Radius hat als im Zentralförderabschnitt, wird im Axialförderabschnitt ein Zwischenraum zwischen der Oberfläche des Zentralkörpers und einer gedachten, zylinderförmigen Umhüllenden Rotorelementes verkleinert, wobei der Radius der Umhüllenden insbesondere dem Außenradius des Rotorelementes entspricht. Gleichzeitig wird durch den geringeren Radius des Zentralkörpers im Zentralförderabschnitt ein großer Förderkanalquerschnitt und dadurch eine hohe Schneidleistung ermöglicht. Der größere Radius des Zentralkörpers im Axialförderabschnitt sorgt im Einzelnen dafür, dass sich geringere Mengen von Erntegut im Zwischenraum im Axialförderabschnitt festsetzen können und nach seiner axialen Förderung seitlich auf insbesondere das äußere Schneidelement eine Belastung ausüben können. Durch eine Erhöhung des Innendurchmessers dieses Raumes wird insbesondere eine kritische Belastung des den Zentralkörper im Zentralförderabschnitt nächstkommenden Abschnitts des Schneidelementes vermieden, wobei dieser Abschnitt insbesondere am weitesten in den Förderkanal hineinragt und dadurch verhältnismäßig fragil ist. Der größere Zentralkörperradius sorgt für eine axiale Förderung des Erntegutes in einem Bereich, parallel zur Rotorachse betrachtet, vor den Schneidelementen und bevor das Erntegut einen unmittelbar neben den Schneidelementen liegenden Teil des Zwischenraumes erreicht. Der größere Radius des Zentralkörpers im Axialförderabschnitt verhindert weitgehend, dass das Erntegut im Axialförderabschnitt die Umhüllende durchdringt. Insgesamt ermöglicht die erfindungsgemäße Lösung die axiale Förderung und den Schnitt einer größeren Erntegutmenge bei geringerem Energiebedarf und bewirkt durch die geringere Bauteilbelastung höhere Standzeiten der einzelnen Komponenten.

Insbesondere haben die Zentralförderelemente den gleichen Außenradius wie das zumindest eine Axialförderelement. Es erstreckt sich eine relativ zur Rotorachse ortsfeste und insbesondere den Förderkanal mitbegrenzende Wandung der Schneidvorrichtung zumindest anteilig über die gesamte Breite des Rotorelementes parallel zur Rotorachse. Durch diese Ausbildung hat das Erntegut bei der axialen Förderung vom Axialförderabschnitt zum Zentralförderabschnitt keine Stufe zu überwinden, wodurch die Förderleistung weiter erhöht ist.

Bevorzugt ist das Verhältnis zwischen dem Radius des Zentralkörpers im Axialförderabschnitt und dem Radius des Zentralkörpers im Zentralförderabschnitt zumindest 1.1, bevorzugt zumindest 1.4, besonders bevorzugt zumindest 1.6 und/oder höchstens 2.5-, bevorzugt höchstens 2.1, besonders bevorzugt höchstens 1.8. Durch dieses Radienverhältnis wird neben einem in der Praxis bewährten Förderkanalquerschnitt ein Axialförderabschnitt bereitgestellt, der eine Füllung des Zwischenraumes weitgehend verhindert und gleichzeitig eine bestmögliche Axialförderwirkung auf das Erntegut entfaltet.

Vorzugsweise ist das Verhältnis zwischen dem Außendurchmesser des Axialförderelementes und dem Radius des Zentralkörpers im Axialförderabschnitt höchstens 2.0, bevorzugt höchstens 1.7, besonders bevorzugt höchstens 1.5 und /oder zumindest 1.2, bevorzugt zumindest 1.3, besonders bevorzugt zumindest 1.4. Durch dieses Verhältnis kann eine besonders hohe Förderwirkung erzielt werden und das Erntegut optimal vor die nächstliegenden und insbesondere konventionell ausgebildeten Schneidelemente gebracht werden.

In einer vorteilhaften Ausgestaltung der Erfindung ist das Verhältnis zwischen einer Differenz, die die Abweichung eines Außenradius des Rotorelementes vom Radius des Zentralkörpers im Zentralförderabschnitt darstellt und eine Differenz, die eine Abweichung des Außenradius des Rotorelementes vom Radius des Zentralkörpers im Axialförderabschnitt darstellt, zumindest 1.2, bevorzugt zumindest 1.6, besonders bevorzugt zumindest 1.9 und/oder höchstens 4.0, bevorzugt höchstens 3.0, besonders bevorzugt höchstens 2.0. Der Außenradius des Rotorelementes ist dabei bevorzugt gleich dem Außenradius der Zentralförderelemente und/oder dem Außenradius des zumindest einem Axialförderelementes. Die Differenzen stellen jeweils eine in radialer Richtung gemessene Spaltweite bzw. Erstreckung des Zwischenraumes dar. Durch das Verhältnis kann ein für hohe Schneidleistungen geeigneter Förderkanal mit konventionell genutzten, zuverlässigen Bauteilen genutzt werden und außerdem die vorbeschriebenen Vorteile im Axialförderabschnitt zuverlässig erreicht werden.

Vorzugsweise beträgt der Radius des Zentralkörpers im Axialförderabschnitt zumindest 120 mm, bevorzugt zumindest 160 mm, besonders bevorzugt zumindest 180 mm und/oder höchstens 250 mm, bevorzugt höchstens 210 mm, besonders bevorzugt höchstens 190 mm. Durch diese bevorzugten Radienbereiche wird ein Umwickeln des Zentralkörpers im Axialförderabschnitt mit Erntegut wirksam vermieden und gleichzeitig eine in der Praxis kritische Umfangsgeschwindigkeit bei gängigen Drehzahlen, die das Risiko des Einzugs in den Zwischenraum im Axialförderabschnitt vermeiden.

In einer vorteilhaften Ausgestaltung der Erfindung ist die Differenz zwischen dem Außenradius des Rotorelementes und dem Radius des Zentralkörpers im Axialförderabschnitt zumindest 40 mm, bevorzugt zumindest 60 mm, besonders bevorzugt zumindest 75 mm und/oder höchstens 120 mm, bevorzugt höchstens 100 mm, besonders bevorzugt höchstens 85 mm. Durch diese in radialer Richtung gemessene Höhe des Raumes zwischen der Oberfläche des Zentralkörpers im Axialförderabschnitt und der Umhüllenden des Axialförderabschnittes wird ein optimaler Grad von in den Zwischenraum eindringenden Erntegutes erreicht, der zur Übertragung des Axialförderimpulses nötig ist.

Das zumindest eine Axialförderelement ist insbesondere über die gesamte axiale Erstreckung des Axialförderabschnittes um den Zentralkörper umlaufend ausgebildet. Dabei umläuft das Axialförderelement den Zentralkörper insbesondere mehrfach bis hin zu weniger als einfach. Alternativ ist die Gewindesteigung des Axialförderelementes so groß, dass das Axialförderelement nur anteilig, um den Zentralkörper umläuft. Die Gewindesteigung des Axialförderelementes ist über die axiale Erstreckung dessen insbesondere konstant.

In dem zumindest einen Axialförderabschnitt sind bevorzugt eine Mehrzahl, insbesondere drei, ineinander eingreifender Axialförderelemente am Zentralkörper angeordnet. Diese bilden gemeinsam eine mehrgängige Axialfördereinrichtung aus. Die zu bevorzugenden drei Axialförderelemente haben insbesondere dem Zentralförderabschnitt zugewandte Enden, die um 120° zueinander versetzt angeordnet sind. Der Gangabstand der Axialförderelemente zu den in axialer Richtung benachbarten ist bevorzugt gleich und entlang ihres Umfanges insbesondere konstant. Durch die Erhöhung der Anzahl der Axialförderelemente kann zum einen deren Steigung erhöht werden, ohne den Abstand zweier in axialer Richtung benachbarter Gewindegänge erhöhen zu müssen. Zum anderen kann eben jener Abstand verringert werden, ohne die Steigung verringern zu müssen. Insgesamt kann dadurch eine höhere Axialfördergeschwindigkeit erzeugt werden und somit ein höherer Massenstrom von Erntegut dem Zentralförderabschnitt zugeführt werden. Durch die höhere Axialfördergeschwindigkeit wird das Erntegut insbesondere nicht nur vor das nächstliegende Schneidelement gefördert, sondern teilweise vor weitere, weiter vom Axialförderabschnitt beabstandete Schneidelemente gefördert, wodurch die Belastung der Schneidelemente gleichmäßiger verteilt wird.

Im Falle nur eines Axialförderelementes pro Axialförderabschnitt hat dieses eine Einzelsteigung von zumindest 100 mm, bevorzugt zumindest 120 mm, besonders bevorzugt zumindest 140 mm und/oder höchstens 200 mm, bevorzugt höchstens 170 mm, besonders bevorzugt höchstens 150 mm. Die Steigung bzw. Einzelsteigung ist dabei der Weg in axialer Richtung, dem das Axialförderelement pro vollständiger Wendelung bzw. Umdrehung um die Rotorachse in axialer Richtung zurücklegt. Bei nur einem Axialförderelement entspricht die Steigung bevorzugt der Summe aus dem axialen Abstand zweier benachbarter Axialförderelementabschnitte und der axialen Erstreckung eines davon. Im Falle einer Mehrzahl ineinander eingreifende Axialförderelemente haben diese bevorzugt eine Steigung, die sich aus dem Produkt ihrer Anzahl und der genannten Einzelsteigungen ergibt. Dadurch wird bei Erhöhung der Anzahl an Axialförderelementen deren axialer Gangabstand weitgehend gleichgehalten und die Steigung entsprechend erhöht. Der Gangabstand hat sich als vorteilhaft für gängiges landwirtschaftliches Erntegut erwiesen. Die größere Steigung bewirkt im Betrieb eine "schnellere" axiale Fortbewegung der Axialförderelemente, was wiederum zu den vorgenannten Vorteilen führt. Die unterschiedlichen Axialförderelemente sind dabei bevorzugt äquidistant zueinander auf dem Zentralkörper angeordnet.

Das zumindest eine Axialförderelement ist insbesondere als wendelförmiges, hochkant vom Zentralköroper abstehenden Blech ausgebildet, wobei der Querschnitt eines Axialförderelementabschnittes eine Erstreckung in radialer Richtung hat, die ein Vielfaches der Erstreckung in axialer Richtung ist. Die Erstreckung des Axialförderelementabschnittes in radialer Richtung beträgt dabei insbesondere 40 mm, bevorzugt zumindest 60 mm und/oder höchstens 120 mm, bevorzugt höchstens 100 mm und besonders bevorzugt höchstens 80 mm. Durch diese Ausbildung bildet das zumindest eine Axialförderelement im Betrieb zumindest eine große, dem Zentralförderabschnitt zugewandte Förderfläche, durch die das Erntegut axial fortbewegt wird.

In einer vorteilhaften Ausgestaltung der Erfindung beträgt ein in axialer Richtung gemessener Abstand zwischen dem zumindest einem Axialförderelement und dem nächstliegenden Schneidelement höchstens 55 mm, bevorzugt höchstens 45 mm, besonders bevorzugt höchstens 35 mm. Dabei ragt das Axialförderelement insbesondere in axialer Richtung in den Zwischenraum des Zentralförderabschnittes und über den Teil des Zentralkörpers mit dem größeren Radius hinaus. Der Abstand des vorgenannten Schneidelementes vom Zentralkörper im Axialförderabschnitt beträgt in axialer Richtung insbesondere höchstens 70 mm, bevorzugt höchstens 60 mm, besonders bevorzugt höchstens 50 mm. Durch diesen geringen Abstand des äußeren Schneidelementes zum Axialförderabschnitt bzw. zum Axialförderelement wird wirksam vermieden, dass sich ungeschnittenes Erntegut zwischen dem Schneidelement und dem Axialförderelement in Umfangsrichtung bzw. in tangentialer Richtung hindurchbewegt, ohne geschnitten zu werden. Außerdem lässt sich axial gefördertes Erntegut somit wirksam auf mehrere äußere Schneidelemente verteilen.

Vorzugsweise ist an einem an den Zentralförderabschnitt angrenzenden Ende des Axialförderelementes ein Verstärkungselement angeordnet. Das Verstärkungselement ist insbesondere an einer vom Zentralförderabschnitt abgewandten Seite des Axialförderelements angeordnet. Insbesondere ist das Verstärkungselement in einem Schnitt des Verstärkungselementes, in dem auch die Rotorachse liegt, keilförmig. Bevorzugt umfasst das Verstärkungselement zumindest eine schräge Stützstrebe vom Zentralkörper bis zu einem davon beabstandeten Abschnitt des Axialförderelements. Der Radius dieses Abschnittes weicht vom Außenradius des Rotorelementes insbesondere weniger ab als vom Radius des Zentralkörpers im Axialförderabschnitt. Das Verstärkungselement erstreckt sich vorzugsweise über einen Umfangswinkel von < 180° um den Zentralkörper. Durch diese Ausbildung ist eine größere Stabilität des zumindest einen Axialförderelementes im an den Zentralförderabschnitt angrenzenden Bereich gewährleistet und gleichzeitig dessen Förderwirkung nur minimal einschränkt.

An das vom Zentralförderabschnitt abgewandte Ende des Axialförderelementes schließt sich insbesondere ein Begrenzungselement an, das in Umfangsrichtung um die Rotorachse verläuft beziehungsweise keine Gewindesteigung hat. Das Begrenzungselement bildet zumindest abschnittsweise einen im Betrieb umlaufenden Rand des Axialförderabschnittes und verbessert die Wirkung des Axialförderelementes auf das axial zu fördernde Erntegut.

Bevorzugt hat die Schneidvorrichtung zumindest ein Mitnehmerelement, das im Zentralförderabschnitt am Zentralkörper angeordnet ist und an den Axialförderabschnitt angrenzt. Insbesondere ist das Mitnehmerelement unmittelbar auch am Axialförderabschnitt befestigt. Insbesondere sind am Zentralförderabschnitt pro Axialförderabschnitt mehrere, insbesondere drei, Mitnehmerelemente angeordnet. Das zumindest eine Mitnehmerelement hat insbesondere einen Außenradius, der im Wesentlichen dem Außenradius des Rotorelementes entspricht. Bevorzugt ist das Mitnehmerelement als sich hauptsächlich radial vom Zentralkörper erstreckender Zinken ausgebildet. Vorteilhaft ist das Mitnehmerelement keinem Schneidelement zugeordnet und befindet sich insofern bevorzugt zwischen dem Mitnehmerelement und dem nächstliegenden Schneidelement in axialer Richtung zumindest ein Zentralförderelement, das dem Schneidelement zugeordnet ist. Durch das zumindest eine Mitnehmerelement wird die Axialförderwirkung des Axialförderelementes auch vom angrenzenden Bereich des Zentralförderabschnittes noch unterstützt und dadurch der Anteil nicht geschnittenen Erntegutes, welcher den Förderkanal seitlich eines äußersten Schneideelementes passiert, weiter reduziert.

Besonders bevorzugt ist das Mitnehmerelement im Bereich eines zum Zentralförderabschnitt gewandten Endes des Axialförderelementes angeordnet. Insbesondere ist jedem der bevorzugt drei Axialförderelemente des Axialförderabschnittes ein Mitnehmerelement zugeordnet. Vorzugsweise ist das dem Axialförderelement zugeordnete Mitnehmerelement im Betrieb dem Axialförderelement um höchstens 10° vor- oder nachlaufend angeordnet. Durch diese Anordnung beziehungsweise Kombination von Mitnehmerelement und Axialförderelement wird die Wirkung des Axialförderelementes auf sich im Grenzbereich zwischen Axialförderabschnitt und Zentralförderabschnitt befindliches Erntegut deutlich verbessert und der Anteil ungeschnittenen Erntegutes ist diesem Bereich weiter verringert.

In einer vorteilhaften Ausgestaltung der Erfindung hat die Schneidvorrichtung zumindest ein Leitelement, das relativ zur Rotorachse ortsfest angeordnet ist. In der Gesamtförderrichtung ist das Leitelement zumindest abschnittsweise, insbesondere vollständig, hinter der Rotorachse angeordnet, das heißt etwa beim Einsetzen der Schneidvorrichtung in einer Ballenpresse in Fahrtrichtung vor der Rotorachse angeordnet. Das Leitelement hat eine sich zumindest im Wesentlichen quer zur Gesamtförderrichtung erstreckende Leitfläche, das heißt die Leitfläche erstreckt sich insbesondere parallel zur Rotorachse und ist insbesondere eben und/oder im Wesentlichen vertikal. Die proaxiale Erstreckung des Leitelementes entspricht im Wesentlichen der axialen Erstreckung des Axialförderabschnittes, das heißt zumindest 70 Prozent, bevorzugt zumindest 80 Prozent, besonders bevorzugt zumindest 90 Prozent dessen. Zwischen den Leitelement und den zumindest einen Axialförderelement verbleibt insbesondere nur ein geringer Spalt, im Bereich dessen das axial zu fördernde Erntegut bewegt und ggf. vom Axialförderelement abgestreift wird.

In einer Betrachtung der Schneidvorrichtung parallel zur Rotorachse ist das Leitelement bevorzugt in einer horizontalen Richtung so weit gegenüber der Rotorachse verschoben, dass die Leitfläche insbesondere 0 mm bis 200 mm, bevorzugt 50 mm bis 150 mm, besonders bevorzugt 80 mm bis 120 mm vor der Rotorachse angeordnet ist. Durch diese Ausbildung trifft zum Axialförderabschnitt gefördertes Erntegut zunächst auf die Leitfläche, welche die Bewegung des Erntegutes in eine radiale beziehungsweise tangentiale Richtung bremst. Vor der Leitfläche angeordnet, übt das Axialförderelement einen axialen Impuls auf das Erntegut aus. Hierdurch wird eine effektivere axiale Förderung des Erntegutes erreicht und insbesondere ein Einzug des Erntegutes in den Zwischenraum verhindert.

Die eingangs gestellte Aufgabe wird außerdem gelöst durch ein landwirtschaftliches Nutzfahrzeug mit einer vorgeschriebenen Schneidvorrichtung. Das landwirtschaftliche Nutzfahrzeug ist insbesondere ausgebildet als Ballenpresse oder als Ladewagen.

Weitere Einzelheiten und Vorteile der Erfindung sind den nachfolgend beschriebenen, schematisch dargestellten Ausführungsbeispielen zu entnehmen; es zeigen:
- Fig. 1: eine Übersichtsdarstellung einer erfindungsgemäßen Schneidvorrichtung,
- Fig. 2: eine Vorderansicht der Schneidvorrichtung gemäß Fig. 1,
- Fig. 3: einen vergrößerten Abschnitt der Darstellungen gemäß Fig. 2,
- Fig. 4: einen Längsschnitt der Schneidvorrichtung gemäß Fig. 1 quer zur Rotorachse,
- Fig. 5: einen vergrößerten Axialförderabschnitt der Schneidvorrichtung gemäß Fig. 1,
- Fig. 6: den Axialförderabschnitt gemäß Fig. 5 in einer weiteren Darstellung,
- Fig. 7: eine erfindungsgemäße Ballenpresse.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1. Sofern sinnvoll sind funktional gleichwirkende Teile mit identischen Bezugsziffern versehen.

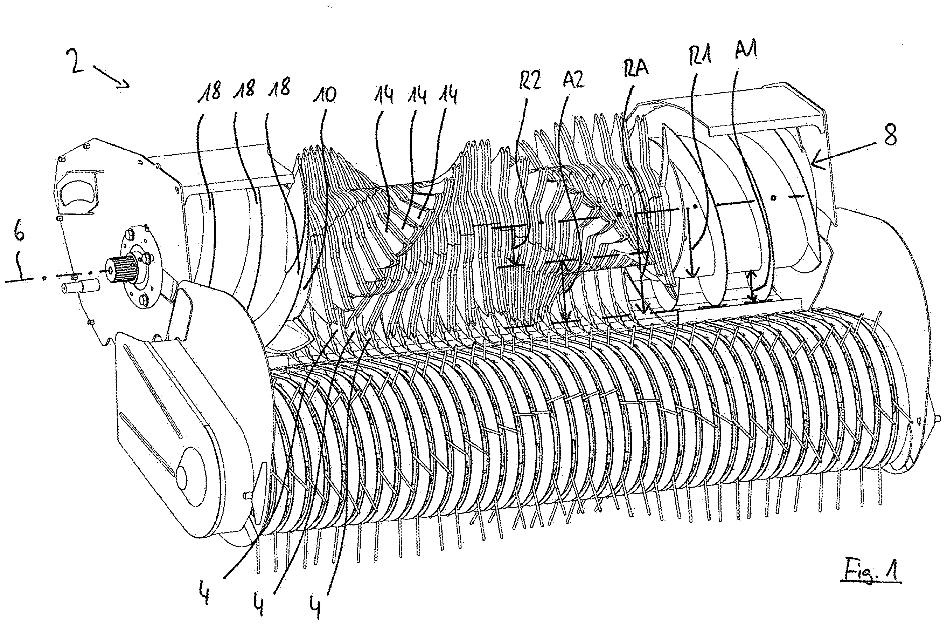

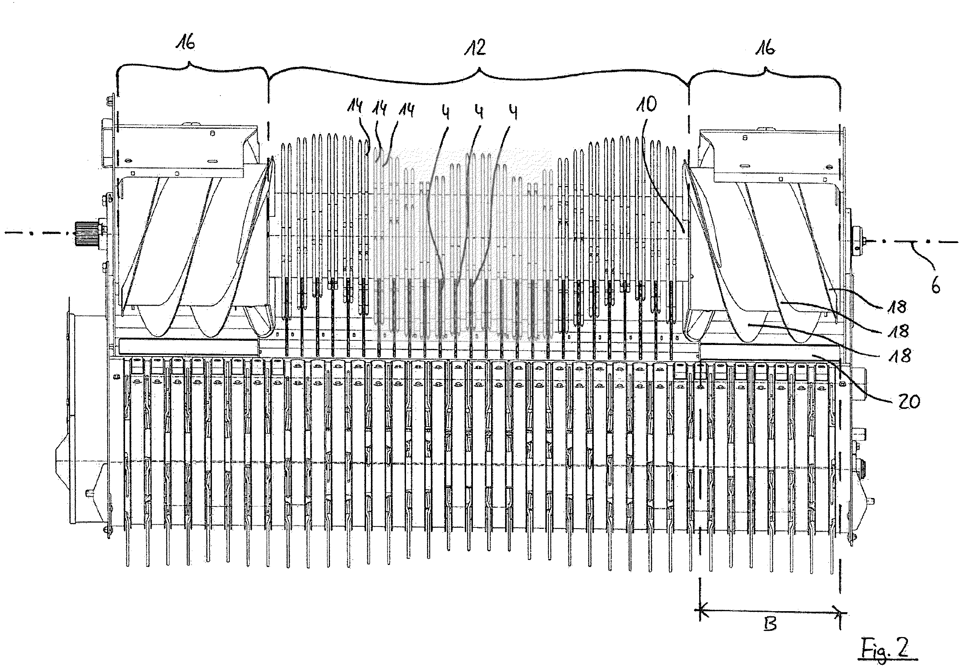

Die in den Figuren 1, 2 und 4 als Ganzes dargestellte erfindungsgemäße Schneidvorrichtung 2 hat 26 Schneidelemente 4 und außerdem hat die Schneidvorrichtung ein im Betrieb um eine Rotorachse 6 rotierendes Rotorelement 8. Die Schneidelemente 4 sind in der gezeigten Schneidstellung federnd nachgiebig zur Rotorachse 6 und insbesondere nicht umlaufend relativ zur Rotorachse 6 angeordnet.

Das Rotorelement 8 hat einen Zentralkörper 10, der als Hohlwelle ausgebildet ist. In einem mittleren Zentralförderabschnitt 12 sind am Zentralkörper 10 des Rotorelementes 8 mehrerer Zentralförderelemente 14 angeordnet. Jeweils sechs Zentralförderelemente 14 sind einem Schneidelement 4 zugeordnet, wobei je drei Paare von Zentralförderelementen 14 über den Umfang des Rotorelementes 8 beurteilt sind. Jedes Paar von Zentralförderelementen 14 kämmt im Betrieb mit dem zugeordneten Schneidelement 4. Dadurch wird Erntegut im Zentralförderabschnitt 12 in tangentiale bzw. Umfangsrichtung gefördert und dabei geschnitten.

Neben dem Zentralförderabschnitt 12 hat das Rotorelement 8 beidenends einen Axialförderabschnitt 16. Beide Axialförderabschnitte 16 haben je drei abschnittsweise spiralförmig um die Rotorachse 6 ausgebildete Axialförderelemente 18. Durch diese wird in der gesamten Breite des Rotorelements 8 insbesondere durch eine Pick-up auf dieses zubewegtes Erntegut in eine axiale Richtung dem Zentralförderabschnitt 12 zugefördert.

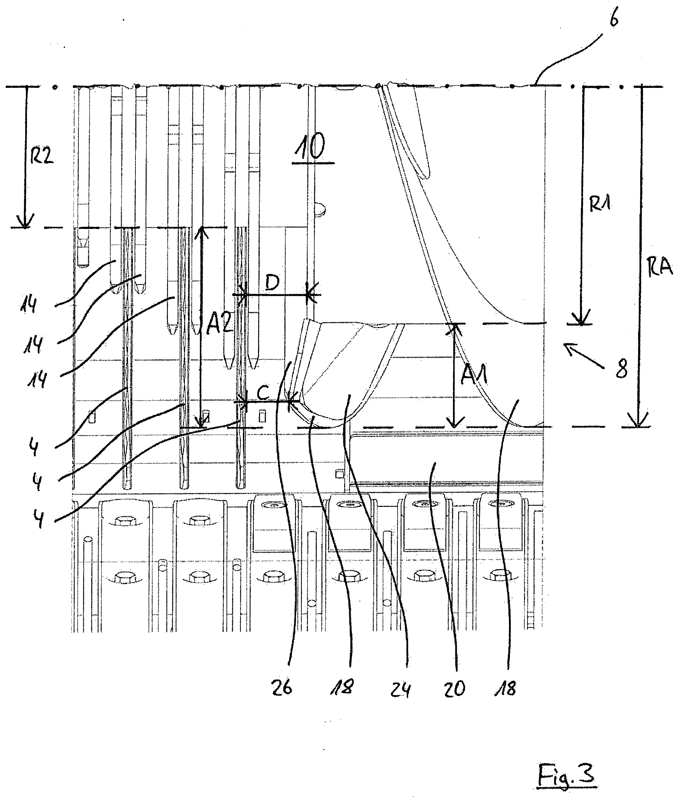

Ein Radius R1 des Zentralkörpers 10 im Axialförderabschnitt 16 ist größer als ein Radius R2 des Zentralkörpers 10 im Zentralförderabschnitt 12 (vergleiche dazu auch Fig. 3). Das Verhältnis zwischen dem Radius R1 und dem Radius R2 ist in der gezeigten Ausführungsform 1,68. Das Verhältnis zwischen einem Außendurchmesser RA des Axialförderelementes 18 und dem Radius R1 des Zentralkörpers 10 im Axialförderabschnitt 16 ist 1,43. Die Differenz A2 ist diejenige zwischen dem Außenradius RA des Rotorelementes und dem Radius R2 des Zentralkörpers 10 im Zentralförderabschnitt 12 und beträgt 155 mm. Die Differenz A1 ist diejenige zwischen dem Außenradius RA des Rotorelementes 8 und dem Radius R1 des Zentralkörpers 10 im Axialförderabschnitt 16 und beträgt 80 mm. Das Verhältnis zwischen der Differenz A2 und der Differenz A1 ist in der gezeigten Ausführungsform 1,94.

Der Außenradius RA beträgt dabei 265 mm. Der Radius R1 des Zentralkörpers 10 im Axialförderabschnitt 16 beträgt 185 mm. Der Radius R2 des Zentralkörpers 10 im Zentralförderabschnitt 12 beträgt 110 mm.

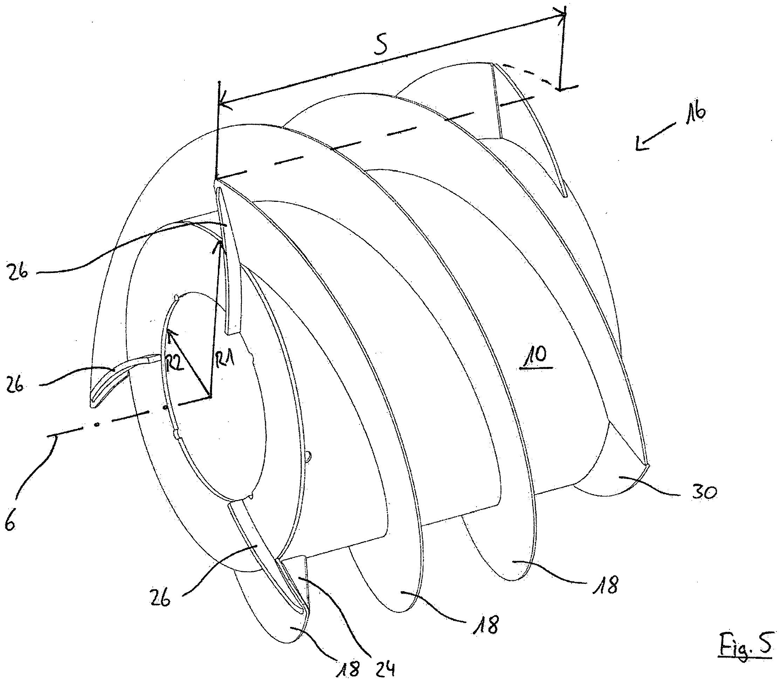

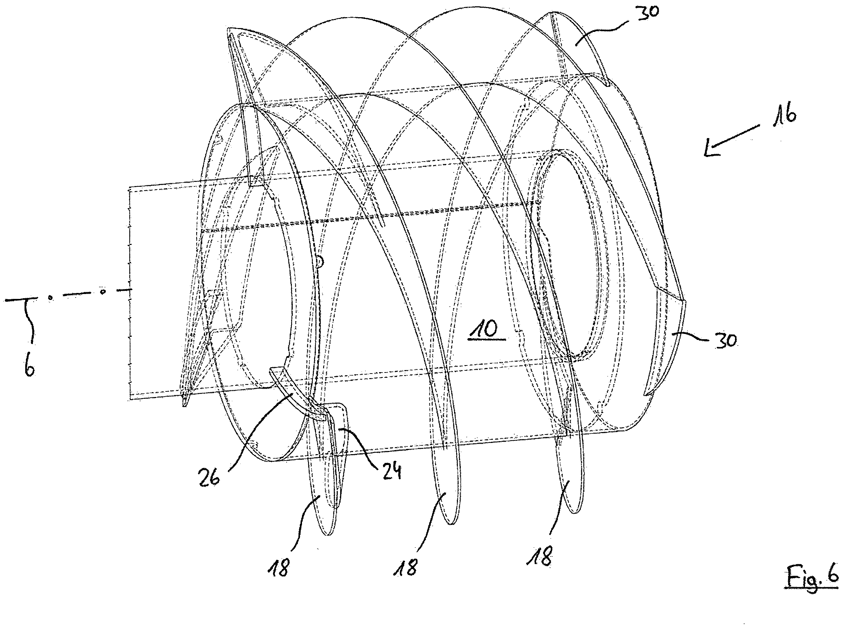

Die Axialförderelemente 18 eines Axialförderabschnittes 16 haben einen Gangabstand von 145 mm. Die Steigung S eines der drei Axialförderelemente 18 ist entsprechend im Wesentlichen ein Dreifaches davon und somit 435 mm. Der Steigungswinkel ist umgerechnet jeweils circa 14° und über dem gesamten Axialförderabschnitt 16 konstant. Dabei sind die Axialförderelemente 18 äquidistant zueinander angeordnet (vgl. die Fig. 5 und 6).

Ein in axialer Richtung gemessener Abstand C zwischen den Axialförderelementen 18 und den nächstliegenden Schneidelement 4 beträgt 32 mm. Einen in axialer Richtung gemessener Abstand D zwischen dem Zentralkörper 10 im Axialförderabschnitt 16 und dem nächstliegenden Schneidelement 4 beträgt 48 mm (vgl. Fig. 3).

An einer vom Zentralförderabschnitt 12 abgewandten Seite der an den Zentralförderabschnitt 12 angrenzenden Enden der Axialförderelemente 18 ist je ein Verstärkungselement 24 angeordnet (vgl. die Fig. 3 und 5). Am gegenüberliegenden Ende der Axialförderelemente 18 ist je ein Begrenzungselement 30 angeordnet (vgl. Fig. 5). Im Zentralförderabschnitt 12 ist am Zentralkörper 10 je ein Mitnehmerelement 26 pro Axialförderelement 18 angeordnet, dass an den Axialförderabschnitt 16 angrenzt. Das Mitnehmerelement 26 ist im Bereich eines zum Zentralförderabschnitt 12 gewandten Endes des Axialförderelementes 18 angeordnet und hat einen Außenradius, der dem Außenradius des Axialförderelementes RA entspricht.

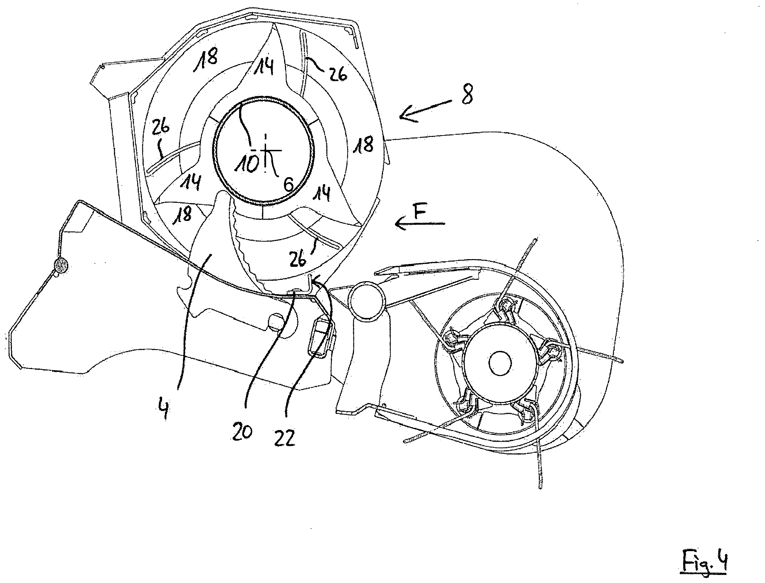

Die Schneidvorrichtung 2 hat pro Axialförderabschnitt 16 einen ortsfest relativ zur Rotorachse 6 angeordnetes Leitelement 20. Das Leitelement 20 ist der Rotorachse 6 mit Bezug auf die Gesamtförderrichtung F des Rotorelementes vorgeordnet (vgl. Fig. 4). Das Leitelement 20 hat eine Leitfläche 22, die sich quer zur Gesamtförderrichtung F erstreckt. Die Breite B des Leitelementes 20 entspricht im Wesentlichen der Erstreckung des Axialförderabschnittes 16 in axialer Richtung.

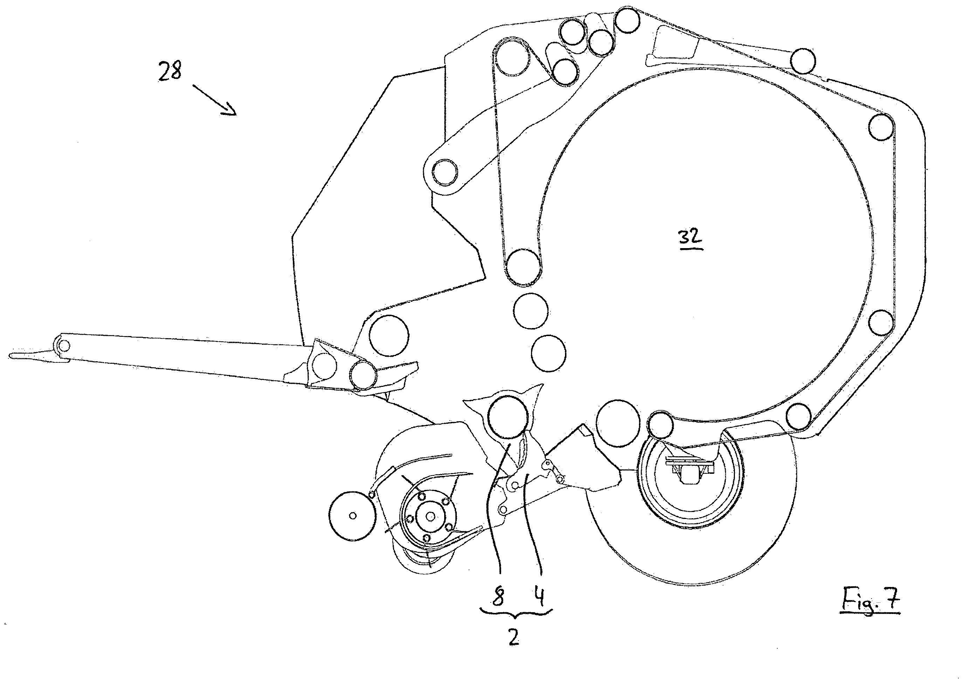

Die in Fig. 7 gezeigte Ballenpresse 28 hat eine Schneidvorrichtung 2, durch die in die Ballenkammer 32 aufzunehmendes Erntegut im Betrieb geschnitten wird.

## Patentansprüche

1. Schneidvorrichtung für landwirtschaftliches Erntegut mit mehreren Schneidelementen (4) und einem im Betrieb um eine Rotorachse (6), zu der die Schneidelemente (4) in einer Schneidstellung ortsfest federnd nachgiebig angeordnet sind, rotierendem Rotorelement (8), das einen Zentralkörper (10) umfasst, an dem in einem Zentralförderabschnitt (12) des Rotorelementes (8) mehrere, den jeweiligen Schneidelementen (4) zugeordnete Zentralförderelemente (14) angeordnet sind und an dem in zumindest einem Axialförderabschnitt (16) des Rotorelementes (8) mindestens ein zumindest abschnittsweise spiralförmig um die Rotorachse (6) verlaufendes Axialförderelement (18) angeordnet ist, **dadurch gekennzeichnet, dass** ein Radius (R1) des Zentralkörpers (10) im Axialförderabschnitt (16) zumindest abschnittsweise größer ist als ein Radius (R2) des Zentralkörpers (10) im Zentralförderabschnitt (12).

2. Schneidevorrichtung nach Anspruch 1, **dadurch gekennzeichnet, dass** das Verhältnis zwischen dem Radius (R1) des Zentralkörpers (10) im Axialförderabschnitt (16) und dem Radius (R2) des Zentralkörpers (10) im Zentralförderabschnitt (12) zumindest 1.1, bevorzugt zumindest 1.4, besonders bevorzugt zumindest 1.6 und/oder höchstens 2.5, bevorzugt höchstens 2.1, besonders bevorzugt höchstens 1.8 ist.

3. Schneidvorrichtung nach einem der vorhergehenden Ansprüche, **dadurch gekennzeichnet, dass** das Verhältnis zwischen dem Außendurchmesser (RA) des Axialförderelementes (18) und dem Radius (R1) des Zentralkörpers (10) im Axialförderabschnitt (16) höchstens 2.0, bevorzugt höchstens 1.7, besonders bevorzugt höchstens 1.5 und/oder zumindest 1.2, bevorzugt zumindest 1.3, besonders bevorzugt zumindest 1.4 ist.

4. Schneidvorrichtung nach einem der vorhergehenden Ansprüche, **dadurch gekennzeichnet, dass** das Verhältnis zwischen einer Differenz (A2) zwischen einem Außenradius (RA) des Rotorelementes (8) und dem Radius (R2) des Zentralkörpers (10) im Zentralförderabschnitt (12) und einer Differenz (A1) zwischen dem Außenradius (RA) des Rotorelementes (8) und dem Radius (R1) des Zentralkörpers (10) im Axialförderabschnitt (16) zumindest 1.2, bevorzugt zumindest 1.6, besonders bevorzugt zumindest 1.9 und/oder höchstens 4.0, bevorzugt höchstens 3.0, besonders bevorzugt höchstens 2.0 ist.

5. Schneidvorrichtung nach einem der vorhergehenden Ansprüche, **dadurch gekennzeichnet, dass** der Radius (R1) des Zentralkörpers (10) im Axialförderabschnitt (16) zumindest 120 mm, bevorzugt zumindest 160 mm, besonders bevorzugt zumindest 180 mm und/oder höchstens 250 mm, bevorzugt höchstens 210 mm, besonders bevorzugt höchstens 190 mm beträgt.

6. Schneidvorrichtung nach einem der vorhergehenden Ansprüche, **dadurch gekennzeichnet, dass** die Differenz (A1) zwischen dem Außenradius (RA) des Rotorelementes (8) und dem Radius (R1) des Zentralkörpers (10) im Axialförderabschnitt (16) zumindest 40 mm, bevorzugt zumindest 60 mm, besonders bevorzugt zumindest 75 mm und/oder höchstens 120 mm, bevorzugt höchstens 100 mm, besonders bevorzugt höchstens 85 mm beträgt.

7. Schneidvorrichtung nach einem der vorhergehenden Ansprüche, **dadurch gekennzeichnet, dass** in dem zumindest einen Axialförderabschnitt (16) an dem Zentralkörper (10) eine Mehrzahl, insbesondere drei, ineinander eingreifender Axialförderelemente (18) angeordnet sind.

8. Schneidvorrichtung nach einem der vorhergehenden Ansprüche, **dadurch gekennzeichnet, dass** das eine Axialförderelement (18) eine Einzelsteigung von zumindest 100 mm, bevorzugt zumindest 120 mm, besonders bevorzugt zumindest 140 mm und/oder höchstens 200 mm, bevorzugt höchstens 170 mm, besonders bevorzugt höchstens 150 mm hat oder die Mehrzahl ineinander eingreifender Axialförderelemente (18) eine Steigung (S) haben, die sich aus dem Produkt der Anzahl ineinander eingreifender Axialförderelemente (18) und der Einzelsteigung ergibt.

9. Schneidvorrichtung nach einem der vorhergehenden Ansprüche, **dadurch gekennzeichnet, dass** ein in axialer Richtung gemessener Abstand (C) zwischen dem Axialförderelement (18) und dem nächstliegenden Schneidelement (4) höchstens 55 mm, bevorzugt höchstens 45 mm, besonders bevorzugt höchstens 35 mm beträgt ist.

10. Schneidvorrichtung nach einem der vorhergehenden Ansprüche, **dadurch gekennzeichnet, dass** an einer vom Zentralförderabschnitt (12) abgewandten Seite des an den Zentralförderabschnitt (12) angrenzenden Endes des Axialförderelementes (18) ein Verstärkungselement (24) angeordnet ist.

11. Schneidvorrichtung nach einem der vorhergehenden Ansprüche, **gekennzeichnet durch** zumindest ein Mitnehmerelement (26), das im Zentralförderabschnitt (12) am Zentralkörper (10) angeordnet ist und an den Axialförderabschnitt (16) angrenzt.

12. Schneidvorrichtung nach einem der vorhergehenden Ansprüche, **dadurch gekennzeichnet, dass** das Mitnehmerelement (26) im Bereich eines zum Zentralförderabschnitt (12) gewandten Endes des Axialförderelementes (18) angeordnet ist und einen Außenradius hat, der zumindest im Wesentlichen dem Außenradius des Axialförderelementes (RA) entspricht.

13. Schneidvorrichtung nach einem der vorhergehenden Ansprüche, **gekennzeichnet durch** zumindest ein relativ zur Rotorachse (6) ortsfest und in Gesamtförderrichtung (F) gesehen hinter der Rotorachse (6) angeordnetes Leitelement (20) mit einer sich zumindest im Wesentlichen quer zur Gesamtförderrichtung (F) erstreckenden Leitfläche (22).

14. Landwirtschaftliches Nutzfahrzeug, insbesondere Ballenpresse (28) oder Ladewagen, **gekennzeichnet durch** die Schneidvorrichtung (2) nach einem der vorhergehenden Ansprüche.
